Europäisches Patentamt

European Patent Office

Office européen des brevets

(11) Publication number: **0 206 708**
A2

# EUROPEAN PATENT APPLICATION

(21) Application number: 86304608.2

(22) Date of filing: 16.06.86

(51) Int. Cl.⁴: **A 01 G 27/00**

(30) Priority: 14.06.85 JP 90635/85
14.06.85 JP 90636/85

(43) Date of publication of application: 30.12.86
Bulletin 86/52

(84) Designated Contracting States: DE FR GB IT NL

(71) Applicant: KABUSHIKI KAISHA TAKEDA SANGYO,
No. 5 Nihonbashimuromachi 4-chome Chuo-ku, Tokyo
(JP)

(72) Inventor: Tanigawa, Hajime, No. 58-7,
Shimotobahiratsuka-cho Fushimi-ku, Kyoto-shi
Kyoto-fu (JP)

(74) Representative: Deans, Michael John Percy et al, Lloyd
Wise, Tregear & CO. Norman House 105-109 Strand,
London WC2R OAE (GB)

(54) Automatic water feeding device.

(57) An automatic water feeding device includes a water storage tank, a water feeding head and a water supply tube extending therebetween. The water feeding head is constituted by the combination of a generally tubular water feeding portion made of water permeable material and having a closed end and a head portion made of watertight material coupled to the upper open end of the water feeding portion. The water feeding tubular portion is adapted to be plunged into the earth or other growing medium in the region of the roots of a plant to be watered. An outlet port through which water to be fed is delivered to the head portion via the water supply tube is provided at a position in the vicinity of the bottom of the water storage tank. The surface level of water in the water storage tank may be below the surface level of the earth or other growing medium into which the water feeding portion is plunged.

AUTOMATIC WATER FEEDING DEVICE

This invention relates to automatic water feeding devices.

Many arrangements for watering agricultural crops in the field or houseplants and the like in greenhouses have been previously proposed. None is entirely satisfactory.

For example, the spreading of water over agricultural crops from above by the use of a plurality of sprinklers in spaced locations has been widely used. This method involves a relatively large volume of water in order to maintain the roots of the plants in an adequately wet state. Much water is lost by evaporation. Watering in this fashion when the plants are in bloom may adversely affect a fruit crop.

In an effort to overcome these problems, it has more recently been proposed to allow water to drip onto the earth to wet the ground with a relatively smaller volume of water only where the roots of individual plants spread. In that this achieves a more effective utilization of precious water supplies, it has attracted much attention.

In specific arrangements, the method is practised with one or more water supply pipes extending above a line of growing plants in a cultivating field allowing a predetermined volume of water to drip onto the ground in the region in which the roots of the plants spread. This method has the advantage that no water will be fed to regions where watering is not required, the supply of water being concentrated into the required areas. This method therefore achieves a better use of the water supply from a source and, for a given quantity of water will achieve an increased rate of harvest of a crop.

However, this water dripping method still involves a number of drawbacks. Specifically, it is difficult to properly adjust the rate of water drip from the supply pipes. There is again an unavoidable loss of water due to evaporation as the water is fed to the surface of the earth from above. In order to reach the roots, a volume of water greater than that which would be required simply for feeding the plants must be dripped onto the ground. In an effort further to improve on the foregoing proposal, it has been suggested to feed water by an underground system. Under this proposal, a number of water supply tubes are connected one to another with water permeable tubes having a plurality of capillary pores formed thereon being interposed between adjacent water supply tubes, the end one of each run of water supply tubes being coupled to a water supply source and the water permeable pipes being embedded in the earth of the cultivating field.

This method represents a substantial improvement in the utility of the water supply in that effective wetting of the roots with a small volume of water is readily achieved with an overall reduced consumption of supplied water and a relatively increased rate of harvest for a given water supply. However, there are again drawbacks. The arrangement of water supply tubes and water permeable tubes has to be selected in dependence on the nature of the plants concerned and like factors. There is a necessity for the water supply tubes to be embedded in the earth and moreover a necessity for removing them from the earth before or after a period of harvesting. Clearly this will result in many man-hours being required to carry out these operations. Thus, even this improved method involves a lower economical efficiency.

A further drawback inherent in each of the above described prior proposed automatic water feeding systems is that they are all intended for large scale plant cultivation. None of these means is adapted for use on a small scale, for example down to single flowerpot scale.

Additionally, each of these prior watering systems requires some form of pumping means or the like.

The present invention has arisen from our work in seeking to overcome the various drawbacks inherent in the prior proposals described above. As will become clear from the description which follows, automatic water feeding systems in accordance with the present invention can be produced for use in a large-scale farm system and also for small-size cultivation right down to flowerpot scale.

It will also become clear from the detailed description which follows that the described embodiments of automatic water feeding device in accordance with the present invention do not include any form of mechanical driving means. In the described arrangements, water is utilized by being absorbed into the earth or other growing medium as that medium dries.

In accordance with the present invention, we provide an automatic water feeding device of the type including a water storage tank, a water feeding head and a water supply tube extending therebetween, characterised in that said water feeding head comprises: a generally tubular water feeding portion made of water permeable material and having a closed end, said water feeding portion being adapted to be plunged into the earth or other growing medium in the region of the roots of a plant to be watered, and a head portion made of water-tight material coupled to the upper open end of the water feeding portion; and in that an outlet port through which water to be fed is delivered to the head portion via said water supply tube is provided at a position in the vicinity of the bottom of the water storage tank, whereby the surface level of water in the water storage tank may be below the surface level of the earth or other growing medium into which the water feeding portion is plunged.

The invention is hereinafter more particularly described by way of example only, with reference to the accompanying drawings, in which:-

Fig. 1 is an overall perspective view of a first embodiment of automatic water feeding device constructed in accordance with the present invention;

Fig. 2 is a vertical sectional view taken generally along the Line II-II in Fig. 1 and with the water feeding portion of the water feeding head plunged into the earth or other growing medium;

Fig. 3 is an enlarged perspective view of the water feeding head;

Fig. 4 is an enlarged vertical sectional view of the water feeding head of Fig. 3, but shown plunged into the earth or other growing medium;

Fig. 5 is a somewhat schematic side view of the device in use with a flowerpot;

Figs. 6(A) to (D) are a schematic vertical sectional view of a water storage tank of the device for explaining how water feeding is automatically effected;

Fig. 7 is a perspective view of a second embodiment of automatic water feeding device in accordance with this invention, wherein the device is made integral with a flowerpot; and

Fig. 8 is a schematic view of another embodiment of automatic water feeding device in accordance with this invention, wherein the device is intended for use in large-scale cultivation.

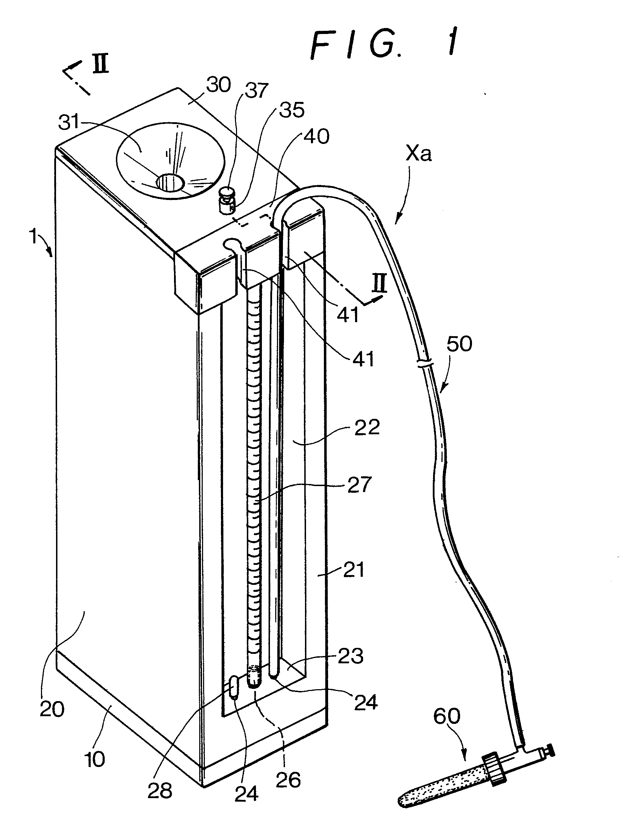

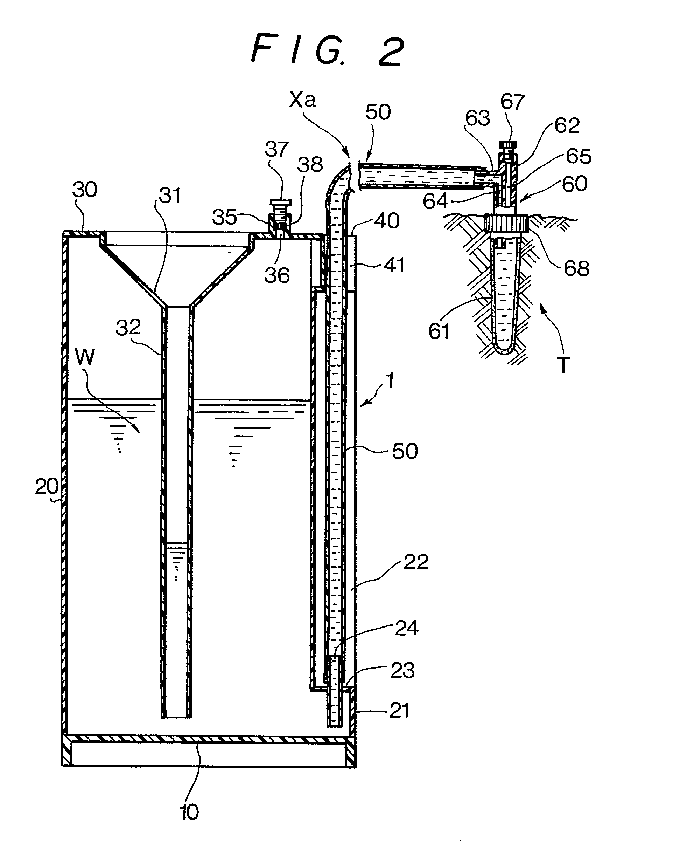

Referring to Figs. 1 and 2 of the drawings, it will be seen that the automatic water feeding device Xa includes a water storage tank 1 serving as water supply source, a water supply tube 50 made of elastomeric material such as rubber or the like having excellent flexibility and a water feeding head 60 through which water is fed to the earth or other growing medium in the region of the roots of a plant to be watered.

As this particular embodiment is designed for use with a single flowerpot, the water storage tank 1 is so designed that any person can easily carry it by themself, and is suitably made of a plastics material. As will be readily apparent from the drawings, the water storage tank 1 comprises a bottom 10, an intermediate portion 20 including a circumextending wall, and a top 30 assembled into an integral construction with the use of adhesive, and has a generally rectangular cross-section.

The intermediate portion 20 has a front side plate 21 which is formed with a recess 22 in the area extending down from the upper end of the front side plate 21 to a position adjacent the bottom 10. A generally horizontally extending portion 23 in the recess 22 is provided with one or more spigot tubes 24 therethrough. As shown, one said tube is coupled at 26 to the lower end of a water level meter 27. The lower end of water supply tube 50 is fitted on to the upper end of another spigot tube. Fig. 1 shows a cap fitted on to the upper end of one said spigot tube 24 not in operation, thereby to inhibit a leakage of water therefrom.

A funnel-shaped water inlet port 31 and a short air vent tube 35 are integrally formed in the top 30. The water inlet port 31 has a water supply pipe 32 connected thereto and extending down to a position adjacent the bottom 10. Air vent tube 25 is fitted with a screw 37 which is threadably engaged to a threaded air vent hole 36 to function as a vave, a packing 38 being interposed between the screw 37 and the lower end of threaded hole 36 which has a reduced diameter.

The tank also has an upper front edge member 40 provided with a short tube (not shown) on to which the upper open end of the water level meter 27 is fitted and a plurality of cut-outs 41 for holding the water supply tubes 50 at an intermediate section thereof.

The water supply tube 50 is an ordinary tube made of elastomeric material having excellent flexibility and it may be transparent or may be opaque. However, for convenience we prefer the tube to be transparent.

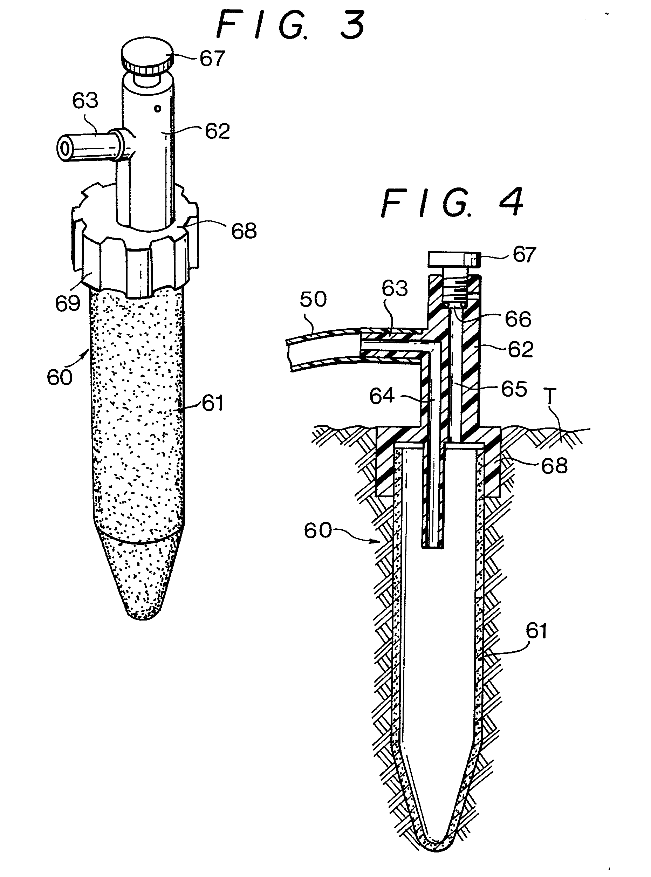

As will be best seen in Figs. 3 and 4, the water feeding head 60 comprises a generally tubular water feeding portion 61 made of porous ceramic material adapted to be plunged into a flowerpot in the region where the roots of a plant spread in the earth or other growing medium and a head portion 62 made of watertight plastics material which is tightly engaged to the upper open end of the water feeding portion 61. As is apparent from the drawings, the bottom end of the water feeding portion 61 is closed with a generally conical end.

The above-mentioned water feeding portion preferably comprises unglazed pottery produced by the steps of mixing clay as the main raw material with fine synthetic resin powder and burning out the thus prepared mixture at an elevated temperature in the range of 1,200 to 1,600°C which evaporates the components of the synthetic resin powder. After completion of such evaporation a large number of very fine invisible capillary pores are left behind over the whole surface area of the unglazed pottery. Water will ooze through the capillary pores under the effect of differential pressure across the wall of the unglazed pottery. The water feeding portion has inner and outer diameters, thickness and length which may be selected in dependence upon the size of flowerpot and the kind of plant to be watered.

The water feeding portion 61 has a hollow interior and its upper proximal end is open to the outside while its lower end is closed with a tapered generally conical portion. Thus, the water feeding portion 61 is designed in an elongated generally tubular configuration which allows it easily to be plunged into earth or other growing media.

The head portion 62 includes a water introduction passage 64 extending from a sideways extending stub pipe 63, on to which the water supply tube 50 is fitted to the interior of the water feeding portion 61. An air vent hole 65 enables air to be vented from the interior of the water feeding portion 61, the air vent hole 65 having a venting screw valve 67 threadably fitted thereto with an airtight packing 66 airtightly disposed below the bottom of the screw 67. The head portion 62 further comprises a skirt 68 which extends about the proximal end of the water feeding portion and has a plurality of generally gear tooth-shaped projections 69 formed on its exterior. The projections 69 on the flange 68 are intended to inhibit turning movement of the water feeding head 60.

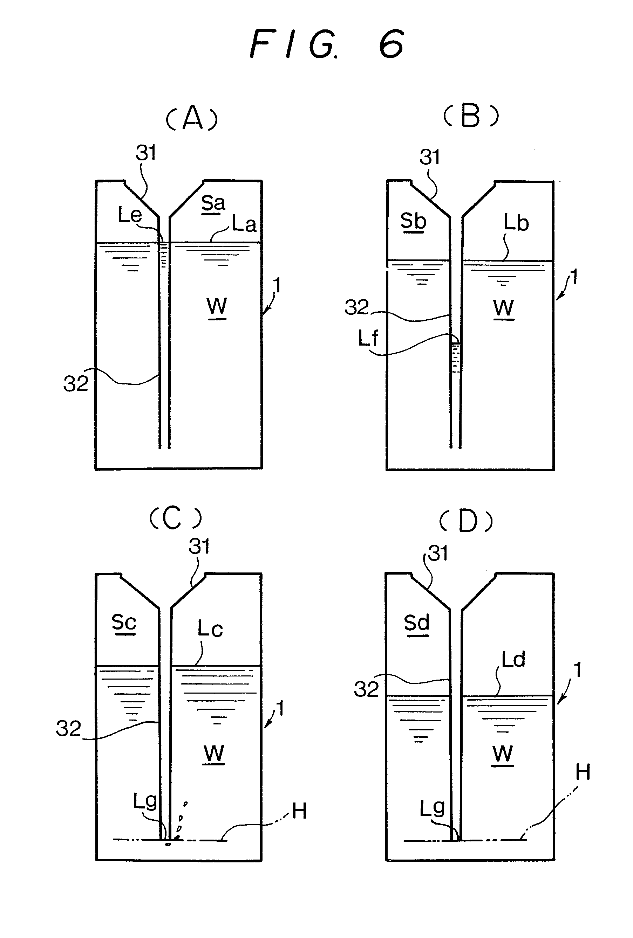

In operation of the above described embodiment, the valve screw 37 is first rotated to displace it from the packing 38 to vent air through the air vent hole 36. At this time the water feeding head 60 is located at a position above the water storage tank 1 and water W is then introduced into the water storage tank 1 via the water inlet port 31 (Fig. 6(A)). When the required volume of water W is filled in the water storage tank 1, the valve screw 67 on the water feeding head 60 is loosened to displace it from the packing 66 to open the air vent hole 65. Then, the water feeding head 60 is lowered below the level of water in the water storage tank 1 whereby both the water supply tube 50 and the water feeding head 60 are filled with water W. When it is confirmed that they are filled with water W, both the valve screws 37 and 67 are rotated to close the respective air vent holes 36 and 65.

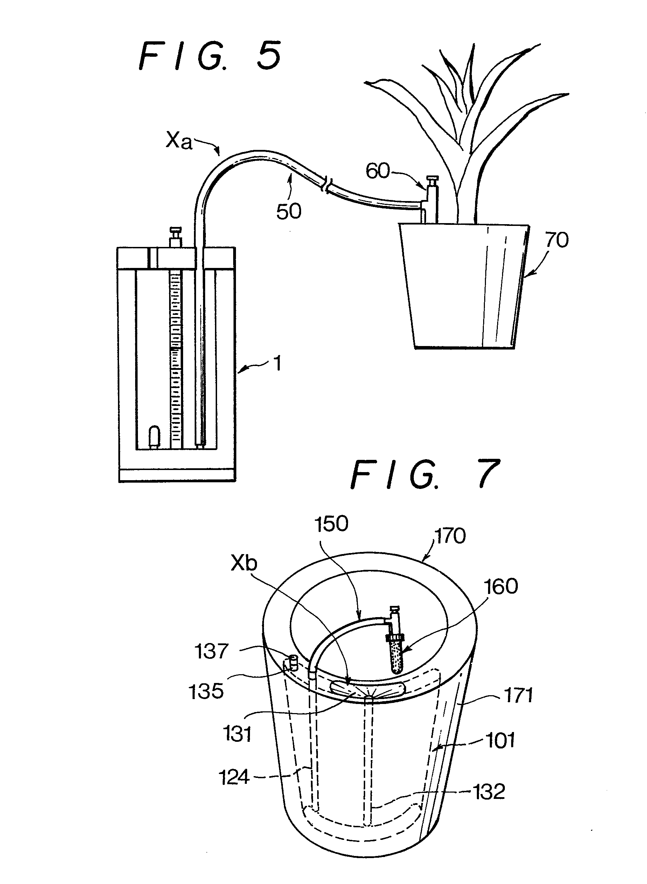

After completion of the above-mentioned operations the water storage tank 1 of the device $X_a$ is placed at a position below the flowerpot 70 as shown in Fig. 5 and the water feeding portion 61 of the water feeding head 60 is then plunged into the earth or other growing medium T in the flowerpot 70 until the skirt 68 of the head portion 62 is embedded in the earth T. Water held in the water storage tank 1 will then ooze into the earth or other growing medium through the water feeding portion 61 absorbtion depending on the degree of dryness of the earth or other growing medium whereby water feeding is automatically effected.

When the tubular portion 61 of the water feeding head 60 is first plunged into the earth T in the manner illustrated in Fig. 5, the water level $L_a$ of water W in the water storage tank 1 is flush with the water level $L_e$ of water W in the water supply pipe 32 as shown in Fig. 6(A).

As water W oozes into the earth under the effect of suction in dependence on the degree of dryness of the earth, the volume of water W in the water storage tank 1 decreases correspondingly. As a result, the initial space $S_a$ in the water storage tank 1 is increased to a space $S_b$ corresponding to the reduction of water W in the water storage tank 1 whereby pressure in the space $S_b$ becomes less than atmospheric, because the interior of the water storage tank 1 is closed. Thus, as shown in Fig. 6(B), the water level in the water supply pipe 32 is caused to lower corresponding to differential pressure between the atmospheric pressure and pressure in the space $S_b$ until a water level $L_f$ is reached.

Because the water level in the water supply pipe 32 cannot fall below the lower end of the latter, the pressure appearing in the horizontally extending plane H including the lower end of the water supply pipe 32 is maintained at a substantially constant level (i.e atmospheric) at all times irrespective of how much the space $S_d$ (Fig. 6(D)) in the water storage tank 1 exceeds the space $S_c$ at which the water level $L_g$ in the water supply pipe 32 first reaches the lower end of the latter as shown in Fig. 6(C).

Thus, after the operative state shown in Fig. 6(C) is reached, feeding of water W into the earth T through the tubular portion 61 is effected only when the earth T becomes dried and thus generates absorbtion greater than the pressure appearing in the plane H in the water storage tank 1) ignoring any small difference in height between the plane H and the lower open end of the spigot tube 24).

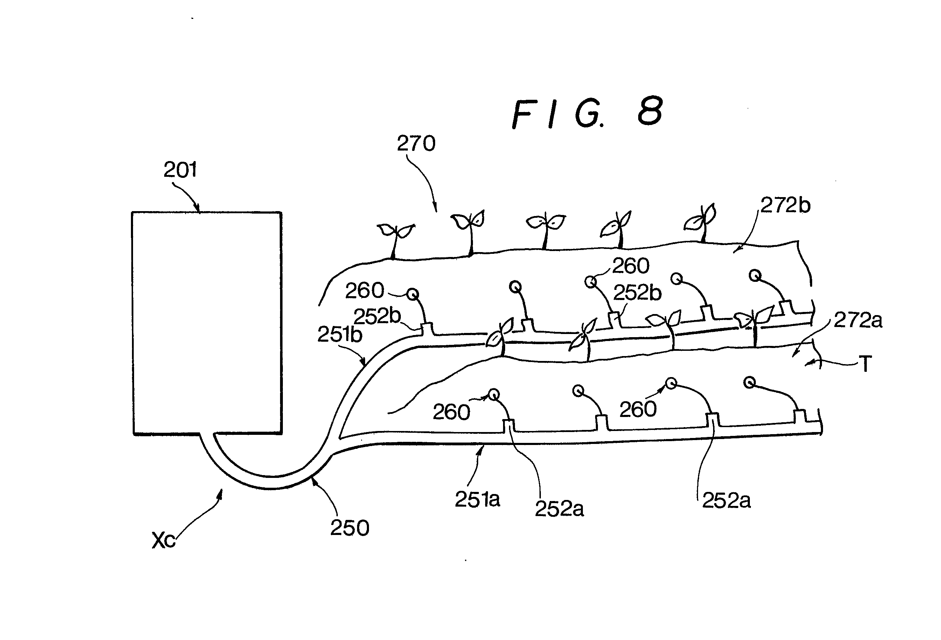

Next. Fig. 7 illustrates by way of a perspective view another embodiment of automatic water feeding device

$X_b$. The device $X_b$ is formed integrally with its flowerpot, plant holder or the like, which has a relatively thick wall thickness so as to accommodate the water tank of device $X_b$. Since the device $X_b$ is otherwise substantially similar to the device $X_a$ in structure and function, the components of the device $X_b$ are identified by reference numerals corresponding to those of the device $X_a$ but increased by 100, and it is therefore thought that a repeated description will not be required. The barrel portion of the flowerpot 170 is identified 171 and will be seen to have a substantial wall thickness.

Fig. 8 schematically illustrates another embodiment of automatic water feeding device intended for use in large-scale cultivation, for example in a farm or horticultural nursery. Since the device $X_c$ usable for such a large-scale cultivation is substantially similar to the device $X_a$ with the exception of increased capacity, its components are identified by reference numerals corresponding to those of the device $X_a$, but increased by 200, and a repeated description should not be necessary. It will be seen that the main water supply tube 250 divides into branched tubes 251a and 251b and those in turn have a plurality of twig tubes 252a and 252b leading thereoff and each in communication with a respective water feeding head 260. Furthermore, reference numerals 272a and 272b designate a ridge in the farm field respectively.

As will be clear from the preceding description, the embodiments of automatic water feeding device described hereinabove include a number of very significant features. Firstly, it will be seen that a sufficient volume of water is automatically fed to the region of the roots of a plant without any necessity for a consideration of the rate of evaporation of water fed from above by conventional watering means and without any need for a mechanical pumping means. Since operation of the embodiments of automatic watering device depend on the absorbtive power of the earth or other growing medium, which in turn depends on the degree of dryness of the earth at any one time, the earth should not become saturated and the wetted region of the earth will gradually increase by diffusion of water through the earth as the supplied water continues to ooze thereinto. Plants in bloom will not be adversely affected by sprinkled water and a relatively increased rate of harvest can be expected. There are no laborious operations involving the digging of the earth to lay water feeding sections by embedding them or for removing such sections on harvesting. Embodiments of device in accordance with the present invention can readily be used either for large-scale cultivation or for micro-cultivation on a flowerpot scale.

CLAIMS

1.      An automatic water feeding device of the type including a water storage tank, a water feeding head and a water supply tube extending therebetween, characterised in that said water feeding head comprises:  a generally tubular water feeding portion made of water permeable material and having a closed end, said water feeding portion being adapted to be plunged into the earth or other growing medium in the region of the roots of a plant to be watered, and a head portion made of water-tight material coupled to the upper open end of the water feeding portion; and in that an outlet port through which water to be fed is delivered to the head portion via said water supply tube is provided at a position in the vicinity of the bottom of the water storage tank, whereby the surface level of water in the water storage tank may be below the surface level of the earth or other growing medium into which the water feeding portion is plunged.

2.      An automatic water feeding device as defined in Claim 1, further characterised in that said water feeding portion is made of a ceramic material having a multiplicity of very fine pores distributed over the whole surface area thereof and  through which water to be fed is caused to ooze under the effect of a differential pressure across the wall of the water feeding portion.

3.      An automatic water feeding device as defined in Claim 2, further characterised in that said water feeding portion is constructed in the form of unglazed pottery produced by the steps of mixing clay as the main raw material with fine synthetic resin powder and then burning out the thus prepared mixture an an elevated temperature in the range of 1,200 to 1,600°C.

4.      An automatic water feeding device as defined in any preceding claim, further characterised in that said head portion is provided with a water introduction hole through which water delivered from the water storage tank via the water supply tube is arranged to be operatively introduced into the interior of the water feeding portion and with an air vent hole through which air in the water feeding portion is arranged to be vented, said air vent hole being fitted with a valve.

5.      An automatic water feeding device as defined in any preceding claim, further characterised in that said head portion has a skirt which extends about the proximal end of said water feeding portion, said skirt being adapted to be plunged into the earth or other growing medium together with the water feeding portion and having a plurality of projections formed thereon which are adapted to serve to inhibit turning movement of the water feeding head when it has been plunged into the earth or other growing medium.

6.      An automatic water feeding device as defined in any preceding claim, further characterised in that the water supply tube comprises a main tube, a plurality of branch tubes which are branched from said main tube and a number of twig tubes, and in that each of said twig tubes communicates with a respective water feeding head.

7.      An automatic water feeding device as defined in any preceding claim, further characterised in that the water storage tank comprises a bottom, a top and an intermediate portion including a circumextending wall; said intermediate portion being provided with one or more spigot tubes extending therethrough and having one open end located in the vicinity of the said bottom, the other open end thereof serving as said outlet port and being adapted to receive one end of the water supply tube; and said top being formed with a funnel-shaped water inlet port and an air vent hole which is fitted with a valve, said water inlet port having a water supply pipe connected thereto and extending down to a position adjacent the bottom.

8.  An automatic water feeding device as· defined in any of Claims 1 to 6, further characterised in that the water storage tank is constituted by a hollow region in the wall of a flowerpot, plant holder or the like having a relatively thick wall, and in that the surface at the top of the wall of the flowerpot or the like is provided with a water inlet port to which a water supply pipe is connected internally of said water storage tank, the lower end of said water supply pipe being located at a position adjacent the bottom of said hollow region, with an air vent hole fitted with a valve, and with a spigot tube adapted to receive one end of the water supply tube, the other end of the spigot tube being located at a position adjacent the bottom of the hollow region.

# FIG. 1

# F I G. 2

# F I G. 3

67

63

62

68

69

60

61

# F I G. 4

67

50

63

66

62

65

T

64

68

60

61

# F I G. 5

# F I G. 7

# FIG. 6

(A)

(B)

(C)

(D)

# F I G. 8

251a 252a 252a

250

Xc

0206708